# EUROPEAN PATENT SPECIFICATION

(11) **EP 0 500 640 B1**
(45) Date of publication and mention of the grant of the patent: **03.05.2000**
(21) Application number: 90916488.1
(22) Date of filing: 13.11.1990
(51) Int. Cl.: A23G 3/00

(54) **HARD CANDY CONTAINING XYLITOL AND A PROCESS FOR THE MANUFACTURE THEREOF**
XYLIT ENTHALTENDE HARTBONBONS UND VERFAHREN ZU IHRER HERSTELLUNG
BONBONS DURS CONTENANT DU XYLITOL ET LEUR PROCEDE DE FABRICATION

(30) Priority: 17.11.1989 FI 895495
(43) Date of publication of application: 02.09.1992
(73) Proprietor: XYROFIN OY, 02150 Espoo (FI)
(72) Inventor: ORAVAINEN, Juha, SF-31600 Jokioinen (FI); YLI-KYYNY, Mauri, SF-00960 Helsinki (FI); Krüger, Christof, W-2000 Hamburg (DE)
(74) Representative: Füchsle, Klaus, Dipl.-Ing.
(86) International application number: FI9000271
(87) International publication number: WO9107100

(56) References cited:
- EP-A- 0 273 000
- EP-A- 0 370 761
- EP-A- 0 377 278
- EP-A- 0 398 279
- US-A- 4 292 337

## Description

The invention relates to hard candy containing as a sweetener xylitol in combination with another tooth-friendly sugar alcohol or a mixture thereof. The invention relates further to a process for manufacturing hard candy of this kind.

Hard candy refers conventionally to confectionery products containing sugar, glucose syrup and small amounts of aromatic substances and colourings, and having a water content usually below 3%. Hard candy can be either amorphous (clear, glass-like), or partly or totally crystalline (e.g. the so-called pulled hard candy) in structure. When xylitol, other polyols or hydrogenated glucose syrups are used instead of sugar and glucose syrup, the term hard candy refers to confectionery products having a structure similar to the conventional ones.

Hard amorphous candy has been conventionally manufactured by concentrating solutions of sucrose and glucose syrup to a small water content and by adding simultaneously aromatic substances and other additives. Candy of this kind is detrimental to the teeth as is well known; neither is it suitable for diabetics. Therefore continuous attempts have been made to develop candy compositions which would be suitable for the manufacture of hard candy and in which sucrose and glucose syrup would be replaced by other sweeteners which do not have the drawbacks stated above.

The cariostatic properties and pleasant taste of xylitol make it a sweetener extremely suitable for replacing sucrose; also other known tooth-friendly sugar alcohols are suited to be used for this purpose. Sorbitol, maltitol, isomalt and lactitol are such tooth-friendly sugar alcohols.

The tooth-friendly properties of xylitol are at their best when the amount of xylitol is at least 50% of the sweeteners used, and also the other sweeteners are selected from the tooth-friendly sugar alcohols stated above. The sensory impression properties of the final product are the most advantageous when the amount of xylitol is 50 to 70%. However, hard amorphous candies like those made of sucrose and glucose syrups cannot be made of xylitol as such or if used in combination with other known tooth-friendly sugar alcohols by conventional techniques for manufacturing hard candy with conventional mixture ratios.

Finnish Patent No. 61,265 discloses a process for manufacturing hard candy containing xylitol, the sweetener being xylitol, of which no more than 10% can be replaced by sorbitol or mannitol. In addition, the candy manufactured by said process cannot contain more than about 3% of aromatic substances and other additives. In this process, powdered xylitol is added to molten xylitol at a temperature not higher than approximately the melting point of xylitol (96°C). The candy mass thus obtained is suitable to be prepared in moulds, wherein the mass hardens in about one minute at room temperature. Thus, the mass is not suitable for manufacturing candies by processes requiring that the mass remains in a mouldable, plastic state for a longer time.

Finnish Patent No. 62,207 discloses a process for manufacturing candy wherein a mixture of the components (a) and (b) is used as the sweetener, the component (a) being sorbitol or xylitol or a mixture thereof, and the component (b) being dextrose or fructose or a mixture thereof, the sweetening composition containing at least about 75% by weight of the component (a). For sorbitol-dextrose compositions, a preferred mixture ratio of 75% of sorbitol and 25% of dextrose is disclosed, and if xylitol is used to substitute for or in addition to sorbitol, the component (a) is suggested to be used preferably in an amount of even about 90% by weight of the composition. A sweetening composition of this kind is suggested to be used in an amount of 40 to 100% by weight of the candy, and the composition is said to be suitable for use also in the manufacture of boiled hard candy, in which case the candy must be allowed to harden for several hours due to the sorbitol contained therein. Said reference does not disclose more detailed facts concerning the preparation or the physical characteristics of the candy obtained. In the examples given, xylitol is mentioned only as a component of lozenged candy. The candy manufactured according to said reference always contains also components detrimental to the teeth (dextrose, fructose).

Xylitol containing products manufactured with other conventional hard candy apparatus are also known; their xylitol content is, however, only less than 20%, and some known tooth-friendly sugar alcohol has been used simultaneously. Owing to its physicochemical nature, xylitol does not produce sufficiently viscous non-crystalline hard candy when the xylitol content is above 20% and the remainder of the product consists of the above-stated known tooth-friendly sugar alcohols. For this reason, the structure characteristic of hard candy has to be provided by other means.

U.S. Patent No. 4,292,337, for example, discloses a confectionery product containing 20 to 35% by weight of xylitol, 20 to 50% by weight of a thickener (e.g. pectin, agar, carboxymethylcellulose, gelatine etc.), 0.5 to 3% by weight of water, 0.1 to 5% by weight of additives (aromatic substances, flavourings, dyes etc.), the remainder being sorbitol. However, on account of the thickeners used, the product has a structure similar to a gum arabic pastille.

EP-A-0 370 761, which has an International publication date of 30.05.91, reveals a hard confectionery product having a glass-like (amorphous) structure and being mainly composed of xylitol and a preparation process including small amounts of water.

The object of this invention is to provide hard candy which contains xylitol in a sufficient amount in view of tooth-friendliness and which is also suitable to be used by diabetics and which, in addition, is well preservable, non-hygroscopic, has a smooth structure, and dissolves slowly in the mouth.

This object is achieved with the hard candy according to the invention containing xylitol and another tooth-friendly sugar alcohol, the sweetener of which comprises 30 to 70% by weight of xylitol and 70 to 30% by weight of sorbitol, maltitol, isomalt, lactitol or a mixture thereof, and which can contain, in addition to the sweetener, up to 3% by weight, preferably no more than 1% by weight, of water, and up to 3% by weight of conventional processing agents and additives such as vegetable fat, emulsifiers, colourings and aromatic substances, and intensive sweeteners, said candy being substantially crystallized throughout.

The sweetener of the hard candy according to the invention contains preferably 50 to 60% of xylitol. This xylitol content is the most preferred in view of both tooth-friendliness and the technique for manufacturing the candy.

The water optionally contained in the hard candy according to the invention is derived from crystal water, which may be present in the raw materials (e.g. lactitol, maltitol, isomalt). Dry raw materials are used in the manufacture of the candy.

A further object of the invention is to provide a process for manufacturing said hard candy, wherein the candy mass obtained as an intermediate product has a composition which is formable into hard candies by known or modified manufacturing techniques. The formable mass should be sufficiently viscous and non-sticky. When the xylitol content is 30 to 70% by weight as stated above, preferably 50 to 60% by weight, amorphous hard candy cannot be obtained, but in order to achieve the hard structure of the final product, the composition must be almost completely crystallized. It was found that in order to obtain a formable candy mass, it is essential to have a controlled crystallization technique by virtue of which the final confectionery product obtains its extremely small-crystal, hard, well preservable, non-transparent structure and which involves a sufficiently long lasting plastic, formable intermediate state of the mass.

Controlled crystallization of the mass can be effected by mixing the molten subcooled sweetening composition long enough to achieve a number of crystals and structure suitable for subsequent processing. However, it has been found more preferable in view of the controllability of the crystallization to crystallize the mass by means of seed crystals, whereby part of the sweetener is added as a crystalline or powdered substance to the remainder of the sweetener, which is in a molten state.

Thus, the invention further provides a process for manufacturing the hard candy containing xylitol and another sugar alcohol as defined above, in which process about 35 to 80% by weight of the total amount of the sweetener is melted at a temperature of 120 to 175°C, whereafter it is cooled to a temperature of 95 to 135°C, at which temperature the remainder of the sweetener is added thereto while mixing as a crystalline or powdered solid, optional processing agents and additives are added to the mass when it is in a molten state, and the mass is formed into candies by forming techniques known per se or modifications thereof, whereby all raw materials are substantially dry.

As stated above, controlled crystallization of the components is essential in the preparation of the candy mass. In the control of the crystallization technique the basic parameters are: composition of the mass, mixing methods, mixing time, ratio of the solid phase to the liquid phase, particle size of the solid phase, cooling rate, and the mixing during cooling. These parameters are finally regulated depending on the particular process and apparatus in such a manner that the desired result is achieved with respect to the requirements set for the final product to be manufactured and to the manufacturing technique.

Xylitol and/or the other sugar alcohols stated above or a mixture thereof can be used as the molten or liquid component. Accordingly, any of the components of the sweetener or a mixture thereof can be used as the solid component, or seed crystals, of the process. The selection of the temperatures used in the process will depend on the melting points of the sugar alcohols used as the liquid and solid phases.

The particle size of the polyol (xylitol or another tooth-friendly sugar alcohol) added as a solid can vary over a wide range, e.g. about 30 to 150 µm.

According to the invention, pure sugar alcohols can be used separately or in combination as raw materials of the sweetener. Commercial dried or crystallized sugar alcohol products obtained by hydrogenation of sugars or syrups can also be used. Such a product is e.g. isomalt sold under the trade name Palatinit (a 1:1 mixture of α-D-glucopyranosyl(1->6)mannitol and α-D-glucopyranosyl(1->6)sorbitol), manufactured by Palatinit GmbH, and maltitol sold under the trade name Malbit^{R} (crystalline), manufactured by Melida, and Maltisorb^{R} (crystalline), manufactured by Roquette Freres.

The processing agents and additives possibly contained in the hard candy according to the invention are e.g. coconut fat or another vegetable fat, which prevents the adhesion of the mass during the manufacture, monoglycerides of fatty acids, e.g. GMS (glycerine monostearate), which prevent the adhesion and improve the emulsification of the fat into the candy mass, wherefore they increase the whiteness of the mass, and the aromatic substances and colourings used as in corresponding products in the conventional confectionery industry avoiding, however, acids detrimental to the teeth. Known intensive sweeteners such as aspartame or acesulfame K can be used for the regulation of sweetness.

The crystallization of the candy mass in a manner best suited for a particular manufacturing technique is effected by regulating the process parameters mentioned above. Thus, the process according to the invention comprises three process types wherein the crystallization techniques differ slightly from each other. These processes are hereafter called a moulding technique, bicomponent crystallization and monocomponent crystallization, and in greater detail they are as follows:

### A. Moulding technique

This technique produces a candy mass which is formable into hard candies by moulding in hard or starch moulds. Sorbitol, lactitol, isomalt, maltitol or a mixture thereof is used in combination with xylitol in the sweetener, the mixture ratio being:
- xylitol: 40 to 65%
- other sugar alcohols: 60 to 35%.

The mass to be moulded is prepared by melting about 60 to 80% of the sugar alcohols used at 120 to 160°C; the main part of the mass to be melted is xylitol. The melting temperature depends on the melting point of the sugar alcohol used in combination with xylitol. The mass is cooled to 100 to 115°C, and the remainder, 20 to 40%, of the sugar alcohols of the sweetener is added thereto as crystalline or powdered preferably to a particle size of less than 50 µm. The moulding temperature of the mass is 60 to 80°C. The mould retention time varies from 1 to 24 hours, whereafter the product is ready to be packed.

In the moulding technique, the viscosity and other structural properties of the mass are regulated by the ratio of the molten component of the different sugar alcohols to the solid component thereof to correspond to the moulding technique used. In addition, the mixing method and mixing time have an effect on the rheology of the mass.

### B. Bicomponent crystallization

The basic composition is xylitol/sorbitol. Instead of sorbitol, lactitol can be used. The xylitol/sorbitol ratio is 40 to 65% / 35 to 60%. Of the sugar alcohols of the basic composition, 45 to 60% are in a molten phase and the remaining 40 to 55% form the solid component (seed crystals), wherein the proportion of xylitol is 20 to 35% and the proportion of sorbitol is 5 to 20%. The crystalline raw materials are powdered to a particle size of 40 to 60 µm.

The mass is prepared by melting the xylitol and sorbitol of the liquid component (45 to 60%) at 120 to 130°C. At this point, colourings, aromatic substances and vegetable fat, which diminishes the stickiness and improves the appearance, and GMS (emulsifier) are added. The mass is cooled to 95 to 105°C, at which temperature the xylitol/sorbitol seed crystal mixture is added, a total of 40 to 55% of the sweetener. The mixing is effected with an efficient planetary or helical mixer; the mixing time is 1 to 3 minutes.

The temperature of the mass thus obtained is 55 to 60°C. The mass is cooled quickly on a cold table to 20 to 30°C, at which temperature the mass is kneaded to suitably regulate the crystallization; the kneading time required will depend on the composition of the mass and the apparatus used. The forming techniques used with this type of mass are e.g. the conventional candy roller technique and rolling to a thin plate of which suitable bits are formed, for example by the chewing gum technique or the lozenge technique using a plastic mass.

The hard candy thus formed can be wrapped after 3 to 24 hours. The final hardness is achieved after 1 to 3 days. When lactitol is used instead of sorbitol, the mass is slightly harder and shorter (i.e. less stretchy) in the plastic stage.

### C. Monocomponent crystallization

The basic composition used in this embodiment contains 30 to 65% of xylitol and either maltitol or isomalt as the other sugar alcohol.

Maltitol or isomalt, the proportion of which is 35 to 70% of the sweetener, is melted at 165 to 175°C and cooled to 120 to 135°C, at which temperature powdered xylitol is mixed into the mass. The mixing is effected with an efficient mixer, e.g. a helical mixer. The particle size of xylitol is 30 to 150 µm, preferably 40 to 60 µm on the average. After the mixing, the mass is cooled on a cold table to 25 to 35°C. Provisional storage of the mixed mass is possible for 1 to 2 hours at +55 to +75°C prior to the forming with candy rollers or toffee manufacturing apparatus and according the forming principles of the manufacturing technique A.

All the embodiments of the process described above produce a final product that is better preservable and more tooth-friendly than the conventional amorphous sucrose/glucose syrup candy. A final product with the best structure has been achieved with bicomponent crystallization using a xylitol/sorbitol composition.

The crystallized xylitol hard candy according to the invention is extremely well preservable nonhygroscopic candy. No changes have been found in a product stored without a wrapping under normal conditions at room temperature (20 to 22°C) in a relative humidity of 20 to 55% during 1 year.

The invention is illustrated in greater detail by the following examples which are not intended to restrict the scope of the invention.

### Example 1

### (Technique A, moulding technique)

The composition of the mass is as follows:

| | |
|---|---|
| Crystalline xylitol | 65.0% |
| Maltitol (purity ≥ 98%) | 34.9% |
| Peppermint flavour | 0.1% |

Xylitol is melted at 125°C, peppermint essence is added, and the mass is cooled to 100°C. Crystalline maltitol (300 µm) is added, and the mass is mixed for 1 minute.

The mass, the temperature of which is 75°C, is moulded in corn starch containing 6% of water, wherein the main part of the mass is crystallized within 2 hours. The product achieves its final hardness in 1 day.

### Example 2

### (Technique A, moulding technique)

The composition of the mass is as follows:

| | |
|---|---|
| Crystalline xylitol | 60.0% |
| Powdered sorbitol, 60 µm | 20.0% |
| Maltitol (purity ≥ 98%) 300 µm | 19.9% |
| Peppermint flavour | 0.1% |

Xylitol is melted at 125°C, peppermint flavour is added thereto while mixing, and the mass is cooled to 103°C, at which temperature powdered sorbitol and maltitol are mixed into the mass.

The mass is moulded at a temperature of 80°C in a corn starch mould as in Example 1. The main part of the mass is crystallized within 3 hours; the final hardening takes about 3 days.

### Example 3

### (Technique B, bicomponent crystallization)

The composition of the mass is as follows:

| | |
|---|---|
| Crystalline xylitol | 11.8% |
| Crystalline sorbitol | 41.4% |
| Powdered xylitol, 40 µm | 38.5% |
| Powdered sorbitol, 60 µm | 6.9% |
| Coconut fat 30/32 | 1.0% |
| GMS | 0.3% |
| Peppermint flavour | 0.1% |

Crystalline xylitol and crystalline sorbitol are melted at 120°C and cooled to 100°C, at which temperature peppermint flavour, GMS and coconut fat are added. Powdered xylitol and sorbitol are added, and the mass is mixed for 1 minute. After the mixing, the temperature is 65°C. The mass is cooled to 20°C on a cold table. The amount of the mass is 10 to 20 kg. The cooled mass is formed with a conventional hard candy roller.

A corresponding technique is suitable for a composition wherein lactitol is used instead of sorbitol. The melting is thereby effected at 130°C, and lactitol of 150 to 300 µm, preferably < 60 µm, is used in the crystallization.

### Example 4

### (Technique C, monocomponent crystallization)

The composition of the mass is as follows:

| | |
|---|---|
| Palatinit | 49.8% |
| Xylitol | 50.0% |
| Peppermint flavour | 0.2% |

Palatinit is melted at 170°C and cooled to 135°C, at which temperature the flavour is added as well as powdered (50 µm) xylitol while efficiently mixing. The mixing time is 2 minutes with a planetary mixer. After the mixing, the mass is cooled to 20 to 30°C, whereafter it is formed with a candy roller or a toffee former. Crystallization to the final hardness takes 3 to 4 days.

## Claims

1. Hard candy containing xylitol, characterized in that it is substantially crystallized throughout and the sweetener thereof consists of 30 to 70% by weight of xylitol and 70 to 30% by weight of sorbitol, maltitol, isomalt, lactitol or a mixture thereof, and that it can contain, in addition to the sweetener, up to 3% by weight, preferably no more than 1% by weight, of water and up to 3% by weight of conventional processing agents and additives such as vegetable fat, emulsifiers, colourings and aromatic substances, and intensive sweeteners.

2. Hard candy according to claim 1, characterized in that 50 to 60% by weight of the sweetener is xylitol.

3. Hard candy according to claim 1 or 2, characterized in that the sweetener consists of xylitol and sorbitol.

4. A process for manufacturing the hard candy according to claim 1, comprising a sweetener containing 40 to 65% by weight of xylitol and 60 to 35% by weight of sorbitol, maltitol, isomalt, lactitol or a mixture thereof, wherein a portion of about 60 to 80% of the substances constituting the sweetener, the main part of said portion being xylitol, is molten at 120 to 160°C, the melt is cooled to 100 to 115°C, at which temperature the remainder of the substances constituting the sweetener is added thereto as a crystalline or powdered solid, preferably in a particle size of less than 50 µm, the mixture is cooled while mixing to 60 to 80 °C and mould in hard or starch moulds, wherein all raw materials are substantially dry.

5. A process according to claim 4, characterized in that the sweetener consists of xylitol and maltitol.

6. A process according to claim 4, characterized in that the sweetener consists of xylitol and sorbitol.

7. A process for manufacturing the hard candy according to claim 1, comprising the sweetener containing 40 to 65% of xylitol and 35 to 60% of sorbitol or lactitol, wherein about 45 to 60% of the substances constituting the sweetener are molten at 120 to 130°C, the melt is cooled to 95 to 105°C, at which temperature the remaining part of the substances constituting the sweetener, about 40 to 55%, the proportion of xylitol in said remaining part being 20 to 35% and the proportion of sorbitol or lactitol in said remaining part being 5 to 20%, is added to the melt as a crystalline or powdered solid, the mixture is cooled in 1 to 3 minutes while mixing to 55 to 60°C and thereafter on a cold table while quickly and simultaneously kneading to 20 to 30°C, and the mass is formed into candies by the candy roller technique or by rolling to a thin plate, of which suitable bits are formed, for example by the chewing gum technique or the lozenge technique using a plastic mass, wherein all raw materials are substantially dry.

8. A process according to claim 7, characterized in that the part of the sweetener to be added as a solid substance has been powdered to a particle size of 40 to 60 µm.

9. A process according to claim 7 or 8, characterized in that the sweetener consists of xylitol and sorbitol.

10. A process for manufacturing the hard candy according to claim 1, comprising a sweetener containing 30 to 65% of xylitol and 35 to 70% of maltitol or isomalt, wherein all of the maltitol or isomalt is molten at 165 to 175°C, the melt is cooled to 120 to 135°C, at which temperature all of the xylitol is added thereto as a solid, preferably as a solid powdered to a particle size to 30 to 150µm, whereafter the mixture is cooled on a cold table while kneading to 25 to 35°C, and the mass is formed into candies by the candy roller technique, toffee manufacturing apparatus or by rolling to a thin plate, of which suitable bits are formed, for example by the chewing gum technique or the lozenge technique using a plastic mass, wherein all raw materials are substantially dry.

11. A process according to claim 10, characterized in that xylitol is added as a solid powdered to an average particle size of 40 to 60 µm.

## Patentansprüche

1. Xylit-enthaltende harte Süßigkeit,
dadurch **gekennzeichnet,** dass
sie im wesentlichen durchkristallisiert ist und der Süßstoff davon aus 30 bis 70 Gew.% Xylit und 70 bis 30 Gew.% Sorbit, Maltit, Isomalz, Lactit oder einer Mischung davon besteht, und dass sie, zusätzlich zum Süßstoff, bis zu 3 und vorzugsweise nicht mehr als 1 Gew.% Wasser und bis zu 3 Gew.% herkömmliche Zubereitungsmittel und Additive wie pflanzliches Fett, Emulgatoren, Färbungsmittel und Aromastoffe, sowie Intensiv-Süßstoffe enthält.

2. Harte Süßigkeit gemäß Anspruch 1,
dadurch **gekennzeichnet,** dass
50 bis 60 Gew.% des Süßstoffes Xylit sind.

3. Harte Süßigkeit gemäß Anspruch 1 oder 2,
dadurch **gekennzeichnet,** dass
der Süßstoff aus Xylit und Sorbit besteht.

4. Verfahren zur Herstellung der harten Süßigkeit gemäß Anspruch 1, die einen Süßstoff umfasst, der 40 bis 65 Gew.% Xylit und 60 bis 35 Gew.% Sorbit, Maltit, Isomalz, Lactit oder eine Mischung davon enthält, wobei ein Teil von ca. 60 bis 80% der den Sußstoff darstellenden Substanzen, dessen Hauptteil Xylit ist, bei 120 bis 160°C geschmolzen und die Schmelze auf 100 bis 115°C abgekühlt werden, bei welcher Temperatur die Restmenge der den Süßstoff darstellenden Substanzen als kristalliner oder pulverisierter Feststoff, vorzugsweise in einer Partikelgröße von weniger als 50 µm, zugegeben wird, worauf die Mischung unter Vermischung auf 60 bis 80°C abgekühlt und in harten oder Stärkeformen geformt wird, wobei alle Rohmaterialien im wesentlichen trocken sind.

5. Verfahren gemäß Anspruch 4,
dadurch **gekennzeichnet,** dass
der Süßstoff aus Xylit und Maltit besteht.

6. Verfahren gemäß Anspruch 4,
dadurch **gekennzeichnet,** dass
der Süßstoff aus Xylit und Sorbit besteht.

7. Verfahren zur Herstellung der harten Süßigkeit gemäß Anspruch 1, die einen Süßstoff umfasst, der 40 bis 65% Xylit und 35 bis 60% Sorbit oder Lactit enthält, wobei ca. 45 bis 60% der den Süßstoff darstellenden Substanzen bei 120 bis 130°C geschmolzen und die Schmelze auf 95 bis 105°C wieder abgekühlt werden, bei welcher Temperatur der restliche Teil der den Süßstoff darstellenden Substanzen, ca. 40 bis 55%, wovon der Anteil von Xylit im genannten restlichen Teil 20 bis 35% und der Anteil von Sorbit oder Lactit im genannten restlichen Teil 5 bis 20% betragen, zur Schmelze als kristalliner oder pulverisierter Feststoff zugegeben wird, worauf die Mischung in 1 bis 3 min unter Vermischung auf 55 bis 60°C und danach auf einem Kühltisch unter raschem und gleichzeitigen Kneten auf 20 bis 30°C abgekühlt und die Masse zu Bonbons mit der Bonbon-Rolltechnik oder durch Auswalzen auf eine dünne Platte, aus der geeignete Stückchen geformt werden, z.B. mit der Kaugummi- oder Pastillen-Verfahrenstechnik für eine plastische Masse, geformt werden, worin alle Rohmaterialien im wesentlichen trocken sind.

8. Verfahren gemäß Anspruch 7,
dadurch **gekennzeichnet,** dass
der Teil des Süßstoffes, der als eine feste Substanz zugegeben wird, auf eine Partikelgröße von 40 bis 60 µm pulverisiert worden ist.

9. Verfahren gemäß Anspruch 7 oder 8,
dadurch **gekennzeichnet,** dass
der Süßstoff aus Xylit und Sorbit besteht.

10. Verfahren zur Herstellung der harten Süßigkeit gemäß Anspruch 1, die einen Sußstoff umfasst, der 30 bis 65% Xylit und 35 bis 70% Maltit oder Isomalz enthält, wobei alles Maltit oder Isomalz bei 165 bis 175°C geschmolzen und die Schmelze auf 120 bis 135°C abgekühlt werden, bei welcher Temperatur alles Xylit als Feststoff, vorzugsweise als Feststoff, der auf eine Partikelgröße von 30 bis 150 µm pulverisiert ist, zugegeben wird, worauf die Mischung auf einem Kühltisch unter Kneten auf 25 bis 35°C abgekühlt und die Masse zu Bonbons mit der Bonbon-Rolltechnik, in Toffee-Hersteilvorrichtungen oder durch Walzen auf eine dünne Platte, aus der geeignete Stückchen geformt werden, z.B. durch die Kaugummi- oder Pastillen-Verfahrenstechnik für eine plastische Masse, geformt werden, worin alle Rohmaterialien im wesentlichen trocken sind.

11. Verfahren gemäß Anspruch 10
dadurch **gekennzeichnet,** dass
Xylit als Feststoff zugegeben wird, der auf eine Durchschnittspartikelgröße von 40 bis 60 µm pulverisiert worden ist.

## Revendications

1. Bonbon dur contenant du xylitol, caractérisé en ce qu'il est pratiquement entièrement cristallisé et que son édulcorant consiste en 30 à 70 % en masse de xylitol et 70 à 30 % en masse de sorbitol, de maltitol, d'isomalt, de lactitol ou d'un de leurs mélanges, et en ce qu'il peut contenir, en plus de l'édulcorant, jusqu'à 3 % en masse, de préférence pas plus de 1 % en masse, d'eau et jusqu'à 3 % en masse d'agents de fabrication et d'additifs classiques tels qu'une matière grasse végétale, des émulsionnants, des colorants et des substances aromatiques, et des édulcorants intenses.

2. Bonbon dur selon la revendication 1, caractérisé en ce que 50 à 60 % en masse de l'édulcorant est du xylitol.

3. Bonbon dur selon la revendication 1 ou 2, caractérisé en ce que l'édulcorant est constitué par du xylitol et du sorbitol.

4. Procédé pour la fabrication d'un bonbon dur selon la revendication 1, comprenant un édulcorant contenant 40 à 65 % en masse de xylitol et 60 à 35 % en masse de sorbitol, de maltitol, d'isomalt, de lactitol ou d'un de leurs mélanges, dans lequel une portion d'environ 60 à 80 % des substances constituant l'édulcorant, la majeure partie de ladite portion étant du xylitol, est fondue à 120 à 160°C, la phase fondue est refroidie jusqu'à 100 à 115°C, température à laquelle on lui ajoute le restant des substances constituant l'édulcorant sous la forme d'un solide cristallisé ou en poudre, de préférence avec des particules d'une dimension inférieure à 50 µm, on refroidit le mélange tout en le mélangeant jusqu'à 60 à 80°C et on le moule dans des moules rigides ou en amidon, toutes les matières premières étant sensiblement sèches.

5. Procédé selon la revendication 4, caractérisé en ce que l'édulcorant est constitué par du xylitol et du maltitol.

6. Procédé selon la revendication 4, caractérisé en ce que l'édulcorant est constitué par du xylitol et du sorbitol.

7. Procédé pour la fabrication d'un bonbon dur selon la revendication 1, comprenant un édulcorant contenant 40 à 65 % de xylitol et 35 à 60 % de sorbitol ou de lactitol, dans lequel environ 45 à 60 % des substances constituant l'édulcorant sont fondues à 120 à 130°C, la phase fondue est refroidie jusqu'à 95 à 105°C, température à laquelle on ajoute à la phase fondue la partie restante des substances constituant l'édulcorant, environ 40 à 55 %, la proportion du xylitol dans ladite partie restante étant de 20 à 35 % et la proportion de sorbitol ou de lactitol dans ladite partie restante étant de 5 à 20 %, sous la forme d'un solide cristallisé ou en poudre, on refroidit le mélange en 1 à 3 minutes tout en le mélangeant jusqu'à 55 à 60°C et ensuite sur une table froide tout en le malaxant rapidement et simultanément jusqu'à 20 à 30°C et on transforme la masse en bonbons par la technique du cylindre à façonner le sucre cuit ou par laminage avec formation d'une plaque mince dans laquelle on forme des morceaux appropriés, par exemple par la technique du chewing gum ou par la technique des pastilles en utilisant une masse plastique, toutes les matières premières étant sensiblement sèches.

8. Procédé selon la revendication 7, caractérisé en ce que la partie de l'édulcorant à ajouter sous la forme d'une substance solide a été pulvérisée jusqu'à une dimension de particules de 40 à 60 µm.

9. Procédé selon la revendication 7 ou 8, caractérisé en ce que l'édulcorant est constitué par du xylitol et du sorbitol.

10. Procédé pour la fabrication d'un bonbon dur selon la revendication 1, comprenant un édulcorant contenant 30 à 65 % de xylitol et 35 à 70 % de maltitol ou d'isomalt, dans lequel tout le maltitol ou l'isomalt est fondu à 165 à 175°C, la phase fondue est refroidie jusqu'à 120 à 135°C, température à laquelle on lui ajoute tout le xylitol sous une forme solide, de préférence sous la forme d'un solide pulvérisé jusqu'à une dimension de particules de 30 à 150 µm, après quoi on refroidit le mélange sur une table froide tout en le malaxant jusqu'à 25 à 35°C et on transforme la masse en bonbons par la technique du cylindre à façonner le sucre cuit, à l'aide d'un appareil de fabrication de toffee ou par laminage jusqu'à formation d'une plaque mince dans laquelle on forme des morceaux appropriés, par exemple par la technique du chewing gum ou par la technique des pastilles en utilisant une masse plastique, toutes les matières premières étant sensiblement sèches.

11. Procédé selon la revendication 10, caractérisé en ce que le xylitol est ajouté sous la forme d'un solide pulvérisé jusqu'à une dimension moyenne de particules de 40 à 60 µm.
